# EUROPEAN PATENT APPLICATION

(11) **EP 4 178 171 A1**
(43) Date of publication of application: **10.05.2023**
(21) Application number: 21206723.5
(22) Date of filing: 05.11.2021
(51) Int. Cl.: H04L 41/50, H04L 41/5041, H04W 24/02, H04L 67/51

(54) **DISCOVERING OBJECTS MANAGED BY A MANAGEMENT SERVICE**

(71) Applicant: Nokia Technologies Oy, 02610 Espoo (FI)
(72) Inventor: GOERGE, Jürgen, 81541 München (DE); POLLAKOWSKI, Olaf, 81541 München (DE)
(74) Representative: TBK

(57) **Abstract**

Apparatus comprising:
one or more processors, and memory storing instructions that, when executed by the one or more processors, cause the apparatus to perform:
monitoring whether a MnS discovery service provided by a MnS discovery service producer newly registers a MnS producer in a registry;
checking if a MnS discovery service consumer is subscribed to the MnS discovery service;
notifying the MnS discovery service consumer that the MnS producer is registered if the MnS discovery service newly registers the MnS producer and the MnS discovery service consumer is subscribed to the MnS discovery service.

## Description

### Field of the invention

The present disclosure relates to object discovery for management services.

### Abbreviations

3GPP 3^{rd} Generation Partnership Project
4G / 5G / 6G 4^{th} / 5^{th} / 6^{th} Generation
AI Artificial Intelligence
AMF Access and Mobility management Function
BTS Base Transceiver Station
CR Change Request
DN Distinguished Name
FCAPS Fault, Configuration, Accounting, Performance, Security (Management)
FDN Fully Distinguished Name
FM Fault Management
HSS Home Subscriber Server
Itf Interface
LAN Local Area Network
ML Machine Learning
MnS Management Service
MO Managed Object
MOI Managed Object Instance
NA Not applicable
NE Network Element
NRM Network Resource Model
PM Performance Management
SA System Architecture
SB Service based
SMF Session Management Function
TR Technical report
TS Technical specification
WLAN Wireless LAN

### Background

Systems for managing networks are organized in several layers where each layer may comprise many tools with different functions that may be provided by different vendors. As a consequence the numerous different management systems are producing a large amount of management data.

In most cases, the tools are deployed in a hierarchical way, like a pyramid, where tools consume data from a lower layer, aggregate the data, and pass them to a higher layer of tools. In the past, the operator established this management pyramid by connecting these tools manually and in a more or less static way.

Due to the introduction of additional network technologies into the operator networks (e.g. 5G, WLAN) and variants thereof (e.g. small cell underlays, distributed antenna systems, non-public networks), the number of tools has steadily increased. Further, the scope of network management changes. In the past, the operators were in charge of their nation-wide network. Now the operators offer networks or network services for well-defined geographical areas to serve e.g. campus networks like harbors, open pit mining, shopping malls, or factories. The well-defined geographical areas may be a portion of an area of one nation or span across plural nations.

Due to the introduction of more sophisticated algorithms to evaluate the data or to influence the network (e.g. AI/ML), the strict hierarchy of tools is dissolving because algorithms might require to aggregate data from different levels of abstraction. Further, management functions, like analytics functions or closed loop functions, are dynamically added to the system to generate analytics reports or to control only parts of the network, e.g. to analyze the network behavior of a slice covering a campus or to specifically control the network quality in such area. As a consequence, also the strict assignment of management functions to managed entities dissolves; I.e., a given network element is not managed by a fixed set of management systems anymore, but management systems are dynamically connected and disconnected and provide data for certain elements and for certain periods of time only.

Since a given network element is not managed by a fixed set of management systems anymore, but management systems are dynamically connected and disconnected, and are providing data for certain elements and for certain periods of time only it is a priory not clear which management system is responsible for which network function. It is not clear which kind of management data for a given network function is available.

Therefore management functions that depend on management data may have any of the following two questions:
1. Which management function do I need to contact in order to get management data (e.g. PM data, analytics reports, or alarms, any data related to FCAPS, etc) of a specific network function?
2. From which network functions will I receive management data, if I contact a given management function?

To analyze these problems, 3GPP SA5 started the work item "Discovery of Management Services (5GDMS)" for Rel-17. By CR S5-213540, the above problems are anchored as requirements REQ-DMS-3 and REQ-DMS-4 in 3GPP TS 28.537, clause 5.2.2:
***REQ-DMS-1:** The 3GPP management system shall provide capabilities allowing MnS producers to publish its their management capabilities (including the endpoint address) for use by MnS consumers wishing to interact with these MnS producers. **REQ-DMS-2:** The 3GPP management system shall provide capabilities allowing MnS consumers to retrieve the management capabilities published by MnS producers. **REQ-DMS-3:** The 3GPP management system shall provide capabilities allowing to discover MnS producers that are managing a specified managed entity. **REQ-DMS-4:** The 3GPP management system shall provide capabilities allowing to discover the managed entities a MnS producer is responsible for.*

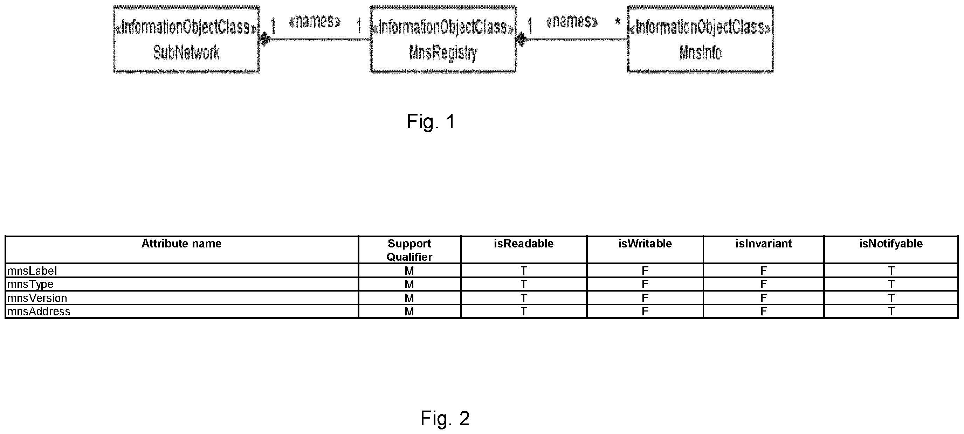

A (partial) solution for REQ-DMS-1 and REQ-DMS-2 is documented in contribution 3GPP CR S5-215532, available at https://www.3gpp.org/ftp/TSG_SA/WG5_TM/TSGS5_139e/Docs/S5-215532.zip. As shown in Figs. 1 and 2, the solution specifies the objects "MnsRegistry" and "Mnslnfo" that can be used to implement a MnS for MnS discovery. In the table of Fig. 2 (and the tables further below), the Support Qualifier "M" means "mandatory", "T" means "true", and "F" means "false".

As may be seen from Fig. 2, Management Services are described by the attributes mnsLabel, mnsType, mnsVersion, and mnsAddress.

Management Services are registered by creating an instance of "MnsProfile" under "MnsRegistry". Management Services are discovered by consumers of the MnS discovery service by reading (using a normal Read operation) the MnS producer exposing the NRM fragment for MnS discovery. The MnS discovery consumer may specify filters to reduce the subset of the returned "MnsProfile" instances.

### Summary

It is an object of the present invention to improve the prior art.

According to a first aspect of the invention, there is provided an apparatus comprising:
one or more processors, and memory storing instructions that, when executed by the one or more processors, cause the apparatus to perform:
monitoring whether a request to register an MnS producer at a MnS discovery service is received;
registering the MnS producer at the MnS discovery service if the request is received.

The MnS producer may belongs to the apparatus, or the MnS producer may be managed by the apparatus.

The request may comprise one or more identities indicating that the MnS producer manages one or more entities identified by the one or more identities; and the MnS producer may be registered along with the one or more identities.

According to a second aspect of the invention, there is provided an apparatus comprising:
one or more processors, and memory storing instructions that, when executed by the one or more processors, cause the apparatus to perform:
monitoring whether a MnS discovery service provided by a MnS discovery service producer newly registers a MnS producer in a registry;
checking if a MnS discovery service consumer is subscribed to the MnS discovery service;
notifying the MnS discovery service consumer that the MnS producer is registered if the MnS discovery service newly registers the MnS producer and the MnS discovery service consumer is subscribed to the MnS discovery service.

The monitoring may comprise monitoring if the MnS discovery service newly registers the MnS producer along with one or more identities, wherein the one or more identities indicate that the MnS producer manages one or more entities identified by the one or more identities; and the notifying may comprise notifying that the MnS producer is registered along with the one or more identities if the MnS discovery service newly registers the MnS producer along with the one or more identities.

According to a third aspect of the invention, there is provided an apparatus comprising:
one or more processors, and memory storing instructions that, when executed by the one or more processors, cause the apparatus to perform:
monitoring if a MnS discovery service provided by a MnS discovery service producer receives a request for an address of a MnS producer registered in a registry of the MnS discovery service;
retrieving the address of the MnS producer from the registry if the request is received;
providing the address of the MnS producer in response to the request.

The instructions, when executed by the one or more processors, may further cause the apparatus to perform:
monitoring if an inquiry is received, wherein the inquiry asks for the one or more identities;
retrieving the one or more identities registered along with the MnS producer from the registry if the inquiry is received;
providing the one or more identities in response to the inquiry.

Each of the one or more identities may be registered along with a respective value of a property; the inquiry may comprise a property filter criterion based on the property; and the instructions, when executed by the one or more processors, may further cause the apparatus to perform:
checking, for each of the retrieved identities, whether the respective value of the property fulfills the property filter criterion;
inhibiting, for each of the retrieved identities, the providing of the respective identity if the respective value of the property does not fulfill the property filter criterion.

The instructions, when executed by the one or more processors, may further cause the apparatus to perform:
monitoring if a query is received, wherein the query asks for identities of MnS producers managing, according to the registry, one of the one or more entities identified by one of the one or more identities;
retrieving the identities of the MnS producers for which the one of the one or more identities is registered in the registry along with the MnS producer if the query is received;
providing the retrieved identities of the MnS producers in response to the query.

Each of the MnS producers may be registered along with a respective capability; the query may comprise a capability filter criterion related to a capability; and the instructions, when executed by the one or more processors, may further cause the apparatus to perform:
checking, for each of the MnS producers, whether the respective capability fulfills the capability filter criterion;
inhibiting, for each of the MnS producers, the providing of the identity of the respective MnS producer, if the respective capability does not fulfill the capability filter criterion.

According to a fourth aspect of the invention, there is provided an apparatus comprising:
one or more processors, and memory storing instructions that, when executed by the one or more processors, cause the apparatus to perform:
subscribing to a MnS discovery service provided by a MnS discovery service producer;
receiving a notification from the MnS discovery service producer that a MnS producer is registered with the MnS discovery service.

The notification may inform that the MnS producer manages one or more entities identified by one or more identities.

According to a fifth aspect of the invention, there is provided an apparatus comprising:
one or more processors, and memory storing instructions that, when executed by the one or more processors, cause the apparatus to perform:
requesting an address of a MnS producer from a MnS discovery service producer;
receiving the address of the MnS producer in response to the request.

In addition to the address of the MnS producer, one or more identities may be received, wherein the identities inform that the MnS producer manages one or more entities identified by one or more identities.

According to a sixth aspect of the invention, there is provided an apparatus comprising:
one or more processors, and memory storing instructions that, when executed by the one or more processors, cause the apparatus to perform:
inquiring a MnS discovery service producer for one or more identities of entities managed, according to a registry of the MnS discovery service producer, by a MnS producer;
receiving, in response to the inquiring, identities of the one or more entities.

The inquiry may comprise a property filter criterion based on a property of the entities managed by the MnS producer.

According to a seventh aspect of the invention, there is provided an apparatus comprising:
one or more processors, and
   memory storing instructions that, when executed by the one or more processors, cause the apparatus to perform:
   querying a MnS discovery service producer for identities of MnS producers managing, according to a registry of the MnS discovery service producer, an entity;
   receiving, in response to the query, identities of the one or more MnS producers managing, according to the registry, the entity.

The query may comprise a capability filter criterion based on a capability of the MnS producers.

According to an eighth aspect of the invention, there is provided a method comprising:
monitoring whether a request to register an MnS producer at a MnS discovery service is received;
registering the MnS producer at the MnS discovery service if the request is received.

The MnS producer may belong to an apparatus performing the method, or the MnS producer may be managed by the apparatus performing the method.

The request may comprise one or more identities indicating that the MnS producer manages one or more entities identified by the one or more identities; and the MnS producer may be registered along with the one or more identities.

According to a ninth aspect of the invention, there is provided a method comprising:
monitoring whether a MnS discovery service provided by a MnS discovery service producer newly registers a MnS producer in a registry;
checking if a MnS discovery service consumer is subscribed to the MnS discovery service;
notifying the MnS discovery service consumer that the MnS producer is registered if the MnS discovery service newly registers the MnS producer and the MnS discovery service consumer is subscribed to the MnS discovery service.

The monitoring may comprise monitoring if the MnS discovery service newly registers the MnS producer along with one or more identities, wherein the one or more identities indicate that the MnS producer manages one or more entities identified by the one or more identities; and the notifying may comprise notifying that the MnS producer is registered along with the one or more identities if the MnS discovery service newly registers the MnS producer along with the one or more identities.

According to a tenth aspect of the invention, there is provided a method comprising:
monitoring if a MnS discovery service provided by a MnS discovery service producer receives a request for an address of a MnS producer registered in a registry of the MnS discovery service;
retrieving the address of the MnS producer from the registry if the request is received;
providing the address of the MnS producer in response to the request.

The method may further comprise:
monitoring if an inquiry is received, wherein the inquiry asks for the one or more identities;
retrieving the one or more identities registered along with the MnS producer from the registry if the inquiry is received;
providing the one or more identities in response to the inquiry.

Each of the one or more identities may be registered along with a respective value of a property; the inquiry may comprise a property filter criterion based on the property; and the method may further comprise:
checking, for each of the retrieved identities, whether the respective value of the property fulfills the property filter criterion;
inhibiting, for each of the retrieved identities, the providing of the respective identity if the respective value of the property does not fulfill the property filter criterion.

The method may further comprise:
monitoring if a query is received, wherein the query asks for identities of MnS producers managing, according to the registry, one of the one or more entities identified by one of the one or more identities;
retrieving the identities of the MnS producers for which the one of the one or more identities is registered in the registry along with the MnS producer if the query is received;
providing the retrieved identities of the MnS producers in response to the query.

Each of the MnS producers may be registered along with a respective capability; the query may comprise a capability filter criterion related to a capability; and the method may further comprise:
checking, for each of the MnS producers, whether the respective capability fulfills the capability filter criterion;
inhibiting, for each of the MnS producers, the providing of the identity of the respective MnS producer, if the respective capability does not fulfill the capability filter criterion.

According to an eleventh aspect of the invention, there is provided a method comprising:
subscribing to a MnS discovery service provided by a MnS discovery service producer;
receiving a notification from the MnS discovery service producer that a MnS producer is registered with the MnS discovery service.

The notification may inform that the MnS producer manages one or more entities identified by one or more identities.

According to an twelfth aspect of the invention, there is provided a method comprising:
requesting an address of a MnS producer from a MnS discovery service producer;
receiving the address of the MnS producer in response to the request.

In addition to the address of the MnS producer, one or more identities may be received, wherein the identities inform that the MnS producer manages one or more entities identified by one or more identities.

According to an thirteenth aspect of the invention, there is provided a method comprising:
inquiring a MnS discovery service producer for one or more identities of entities managed, according to a registry of the MnS discovery service producer, by a MnS producer;
receiving, in response to the inquiring, identities of the one or more entities.

The inquiry may comprise a property filter criterion based on a property of the entities managed by the MnS producer.

According to an fourteenth aspect of the invention, there is provided a method comprising:
querying a MnS discovery service producer for identities of MnS producers managing, according to a registry of the MnS discovery service producer, an entity;
receiving, in response to the query, identities of the one or more MnS producers managing, according to the registry, the entity.

The query may comprise a capability filter criterion based on a capability of the MnS producers.

Each of the methods of the eighth to fourteenth aspects may be a method of discovering objects.

According to a fifteenth aspect of the invention, there is provided a computer program product comprising a set of instructions which, when executed on an apparatus, is configured to cause the apparatus to carry out the method according to any of the methods of the eighth to fourteenth aspects. The computer program product may be embodied as a computer-readable medium or directly loadable into a computer.

According to some embodiments of the invention, at least one of the following advantages may be achieved:
- management systems may identify the entities managed by a management system;
- management systems may identify the (other) management systems managing an entity.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein:
Fig. 1 shows a NRM fragment for MnS discovery according to 3GPP CR S5-215532;
Fig. 2 shows attributes of Mnslnfo according to 3GPP CR S5-215532;
Fig. 3 shows a message flow according to some example embodiments of the invention;
Fig. 4 shows a message flow according to some example embodiments of the invention;
Fig. 5 shows a message flow according to some example embodiments of the invention;
Fig. 6 shows a message flow according to some example embodiments of the invention;
Fig. 7 shows a message flow according to some example embodiments of the invention;
Fig. 8 shows a message flow according to some example embodiments of the invention;
Fig. 9 shows a message flow according to some example embodiments of the invention;
Fig. 10 shows a message flow according to some example embodiments of the invention;
Fig. 11 shows a message flow according to some example embodiments of the invention;
Fig. 12 shows a message flow according to some example embodiments of the invention;
Fig. 13 shows a message flow according to some example embodiments of the invention;
Fig. 14 shows a class diagram according to some example embodiments of the invention;
Fig. 15 shows a message flow according to some example embodiments of the invention;
Fig. 16 shows a message flow according to some example embodiments of the invention;
Fig. 17 shows a message flow according to some example embodiments of the invention;
Fig. 18 shows an apparatus according to an example embodiment of the invention;
Fig. 19 shows a method according to an example embodiment of the invention;
Fig. 20 shows an apparatus according to an example embodiment of the invention;
Fig. 21 shows a method according to an example embodiment of the invention;
Fig. 22 shows an apparatus according to an example embodiment of the invention;
Fig. 23 shows a method according to an example embodiment of the invention;
Fig. 24 shows an apparatus according to an example embodiment of the invention;
Fig. 25 shows a method according to an example embodiment of the invention;
Fig. 26 shows an apparatus according to an example embodiment of the invention;
Fig. 27 shows a method according to an example embodiment of the invention;
Fig. 28 shows an apparatus according to an example embodiment of the invention;
Fig. 29 shows a method according to an example embodiment of the invention;
Fig. 30 shows an apparatus according to an example embodiment of the invention;
Fig. 31 shows a method according to an example embodiment of the invention; and
Fig. 32 shows an apparatus according to an example embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

3GPP has not provided a solution yet for REQ-DMS-3 and REQ-DMS-4 of 3GPP TS 28.537, clause 5.2.2. With the current solution it is neither possible to find a management service based on the fact whether it manages a specific network functions nor to identify whether a specific management service is managing a specific managed entity. The current solution is not able to inform interested MnS whether managed entities have been newly connected or have been disconnected from a given management system. Some example embodiments of the invention provide a solution to at least one of these issues.

Especially in addition to REQ-DMS-4, the consumer of a Management Service might be interested whether Managed Entities are connected or disconnected from a given Management Service provider. E.g. management systems that provide analytics reports, on one hand depend on input data provided by many connected Managed Entities. On the other hand, the output of these systems are highly aggregated reports that may not contain any reference on the individual inputs. For the consumers of such reports it might be relevant to know which Managed Entities were or were not connected to the analytics system and did/did not contribute input to the analytics function.

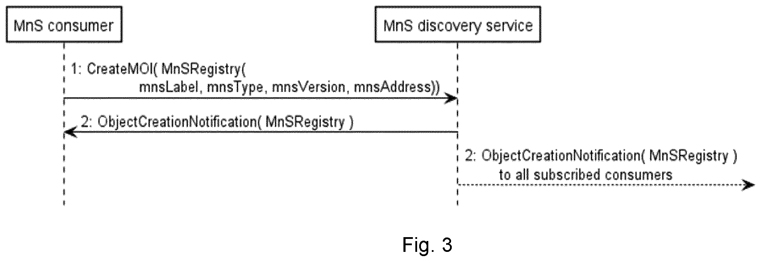

3GPP does not describe how "MnsProfile" instances are created under "MnsRegistry" in the MnS discovery producer for MnS discovery. According to some example embodiments of the invention, as shown in Fig. 3, MnS discovery consumers create these objects using a normal Create operation "createMOI", as defined by 3GPP TS 28.532. The MnS discovery consumer acts on behalf of the new MnS producer that wants to register the offered MnS in the MnS registry.

Note: It is a consequence of the service-based management architecture (SBMA) of 3GPP that the MnS discovery consumer and the to be registered MnS producer are treated as completely separate entities which might or might not be implemented at the same management system. In many cases, a network management system will implement both, a management service *producer* like the northbound fault management ("FM") interface to send alarms to other tools and a *consumer* ("MnS discovery consumer") of the discovery service, that is in charge to register the northbound FM interface at the MnS discovery service producer ("MnS discovery producer").

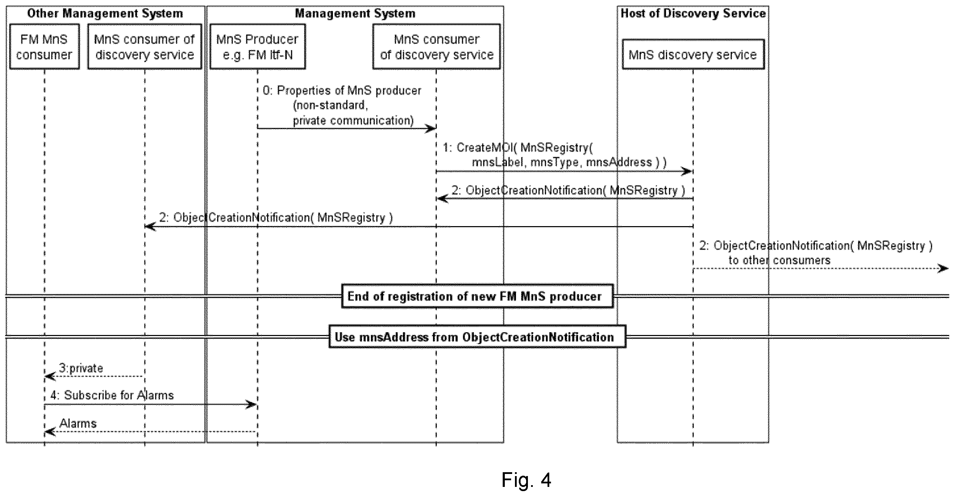

As shown in Fig. 4, by private communication (0) the consumer of the MnS discovery service ("MnS discovery consumer") learns the properties of the FM MnS producer to be registered. "Private communication" typically means a communication which is proprietary (not standardized), although even a "Private Communication" may be standardized.

The MnS discovery consumer creates an instance of the object MnSRegistry with corresponding attribute values at the MnS discovery service (1), i.e. at the MnS discovery producer. As response, the MnS discovery service (i.e. the MnS discovery producer) sends corresponding ObjectCreationNotifications to all subscribed discovery consumers.

If the MnS discovery consumer of the discovery MnS at the "Other ManagementSystem" is subscribed to notifications, then it will receive the ObjectCreationNotification of the newly registered FM MnS producer, including the address to contact it (2). The system might forward the address by private communication to its FM MnS consumer (3), which in turn might subscribe (4) at the FM MnS producer to receive alarms. From now on, the FM MnS producer will send alarms via its northbound interface to the "Other Management Tool". A corresponding procedure applies to other FCAPS functions.

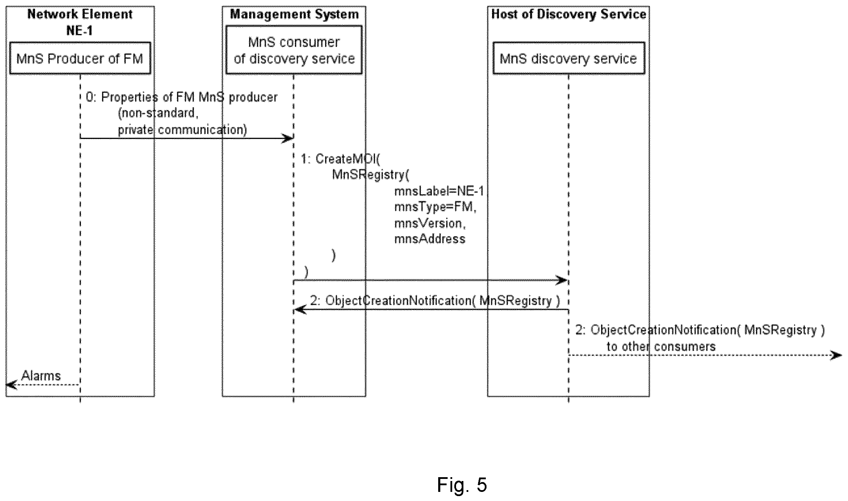

In some example embodiments, a network element that offers its management services (e.g. FM or one of the other management fragments like configuration management, accounting management, performance management, or security management ("FCAPS")) to other management systems might not be able to implement the consumer of the MnS discovery service, e.g. due to resource constraints. In such cases, e.g. a management system might register the FM management services of the network element at the MnS discovery service on behalf of the network element. That is, as shown in Fig. 5, NE-1 informs the Management System on its properties by private communication (0), and the Management System registers NE-1 with its service (e.g. FM) at the discovery service (1). Then, the procedure is the same as that shown in Fig. 4.

In both cases of Figs. 4 and 5, the logical separation of MnS producer and MnS discovery consumer also has the consequence that the standard may not specifiy how the consumer of the discovery service gets to know the information about the to be registered management service provider: This information transfer may be private and depend on implementation.

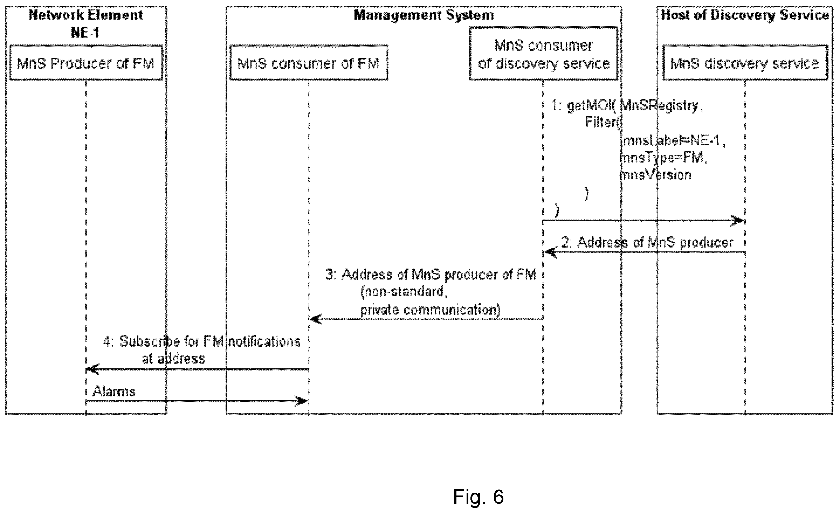

Therefore, after the registration of Fig. 4 or Fig. 5, a consumer of the MnS discovery service (i.e., a consumer of the MnSRegistry, a "MnS discovery consumer") may request a management service based on its name, type, and version. Thus, as shown in Fig. 6, another management system requests a reference to the MnS producer with mnsLabel=NE-1, mnsType=FM, and unspecified mnsVersion (1). As response, the MnS discovery service (i.e. the MnS discovery producer) returns the address of the requested MnS producer (2), i.e. of NE-1. By internal private communication, the other management system forwards this information to its consumer of FM (3). As final step (4), the MnS consumer for FM of the other management system uses the address to subscribe at the FM MnS producer at NE-1 for Alarms. From now on the network element will send alarms to MnS consumer for FM of the other management system.

Some example embodiments of the invention provide the following enhancements:

### A) Registering Managed Entities with the MnS discovery service

A MnS discovery consumer, acting on behalf of a new MnS producer, may register the capabilities of the new MnS producer, including the managed entities that it manages, with the discovery MnS producer.

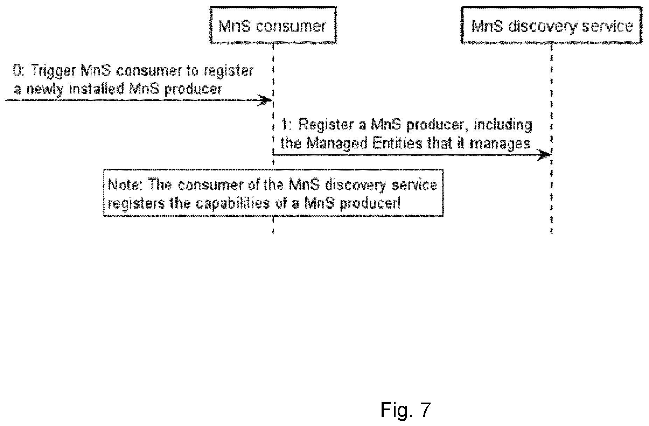

As shown in Fig. 7, the procedure may be as follows:
0. A MnS discovery consumer receives the information that a newly installed MnS producer shall be registered with the MnS discovery producer of the MnS discovery service.
   Note: In case the set of managed entities managed by the MnS producer changes, the MnS producer will trigger the MnS discovery consumer of the discovery MnS to update the MnS discovery service (i.e. the registry at the MnS discovery producer).
1. The MnS discovery consumer registers the MnS producer with the MnS discovery service, *including the managed entities, that the MnS producer manages.*
   Note: In case the set of managed entities managed by the MnS producer changes, then the MnS discovery consumer of the MnS discovery service will update the registration accordingly.

Enhancements B) and/or C) may be performed after Enhancement A) was performed.

### B) Discovering Managed Entities managed by a MnS producer

MnS discovery consumers of the MnS discovery service may inquire from the MnS discovery service which managed entities are managed by a given MnS producer.

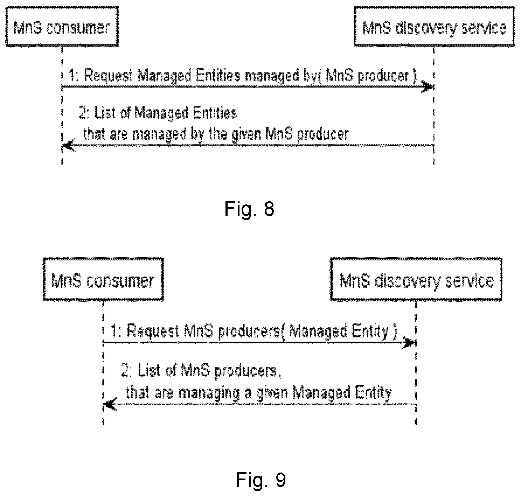

As shown in Fig. 8, the procedure may be as follows:
1. A MnS discovery consumer sends an inquiry to the MnS discovery producer. The inquiry specifies a MnS producer whose Managed Entities shall be returned ("Give me the Entities that a MnS producer manages"). The inquiry may include a filter to reduce the returned set of MnS Managed Entities, for example by specifying that only Managed Entities of a certain type, such as a BTS, shall be returned.
2. The MnS discovery service sends as response the list of Managed Entities, that the MnS producer specified in the request manages.

### C) Discovering MnS producers managing a Managed Entity

MnS discovery consumers of the MnS discovery service may query from the MnS discovery service which MnS producers are managing a given Managed Entity. They may specify that only MnS producers with certain capabilities (such as the MnS type; e.g. FM or PM) shall be returned.

As shown in Fig. 9, the procedure may be as follows:
1. A MnS consumer sends a query to the discovery MnS: The query specifies a Managed Entity whose MnS producers shall be returned ("Give me the MnS producers that manage an entity"). The query may include a filter to reduce the returned set of MnS producers, for example by specifying that only MnS producers of a certain type, such as those for Fault Supervision, shall be returned.
2. The MnS discovery service sends as response a list with MnS producers, that manage the given Managed Entity and satisfy the filter criteria as to the MnS producer properties.

The enhancements A) to C) to the MnS discovery service may be implemented in the context of the existing 3GPP management framework as follows:
- When the Managed Entities managed by a MnS producer are described just with their DNs, typically option 1 may be used
- When the Managed Entities managed by a MnS producer are described with their DN and additional properties, typically option 2 may be used.

### Option 1: without Managed Entity properties

### Enhancement of "Mnslnfo"

The object "Mnslnfo" is extended with the attribute "managedObjects".

**Table 1: Attribute "managedObjects" of object "Mnslnfo"**

| **Attribute name** | **Support Qualifier** | **isReadable** | **isWritable** | **islnvariant** | **isNotifyable** |
|---|---|---|---|---|---|
| managedObjects | M | T | T | F | T |

**Table 2 : Definition of the attribute "managedObjects"**

| **Attribute Name** | **Documentation and Allowed Values** | **Properties** |
|---|---|---|
| managed Objects | List of manged objects managed by the MnS. The managed objects are identified with their Distinguished Name (DN). | type: Dn |
| | | multiplicity: * |
| | | isOrdered: False |
| | Note: A managed object represents in the management system a Managed Entity. | isUnique: True |
| | | defaultValue: None |
| | | isNullable: False |
| | AllowedValues: NA | |

### A) Registering Managed Entities

To register a new MnS producer, a MnS discovery consumer, acting on behalf of that MnS producer, creates an instance of "Mnslnfo" under "MnsRegistry" on the MnS discovery producer exposing the MnS discovery service. For the creation of the object, a normal Create operation "createMOI" as defined by 3GPP TS 28.532 may be used.

MnS discovery consumers with subscriptions on the MnS discovery producer receive an object creation notification ("notifyObjectCreation"), that contains a copy of the new "Mnslnfo" instance. This notification informs the MnS discovery consumers about the availability of a new MnS producer including the entities managed by the MnS producer.

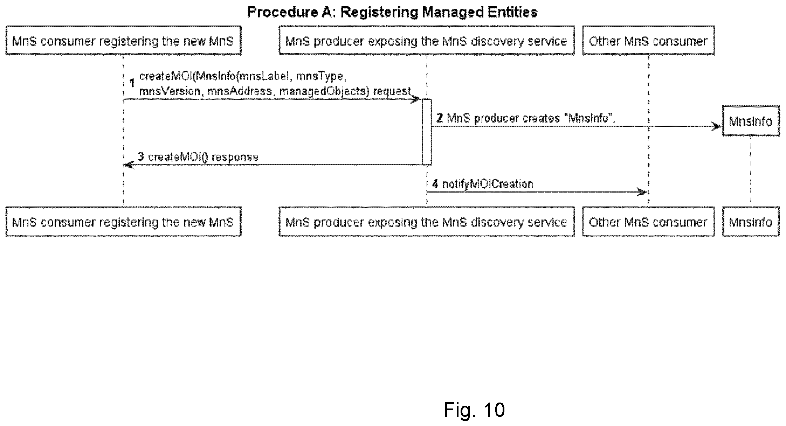

As shown in Fig. 10, the procedure may be as follows:
A MnS discovery consumer gets to know via private communication that a new MnS producer (exposing a certain Management Service with certain Managed Entities) has been added to the management system.
1. The MnS consumer sends an object Creation ("createMOI" as defined by 3GPP TS 28.532) request to the MnS producer exposing the MnS discovery service. The MnS consumer specifies in the Creation request the "Mnslnfo" object to be created under "MnsRegistry". The "Mnslnfo" object includes the new attribute "ManagedObjects".
2. The MnS discovery producer exposing the MnS discovery service creates a "Mnslnfo" object.
3. The MnS discovery producer returns the object Creation response to the MnS discovery consumer indicating successful creation of "Mnslnfo".
4. An object creation notification is sent to other MnS discovery consumers, that are subscribed to receive object creation notifications.

### B) Discovering all Managed Entities managed by a MnS producer

A MnS discovery consumer may inquire from a MnS discovery producer exposing the MnS discovery service the set of all Managed Entities that are managed by a given MnS producer.

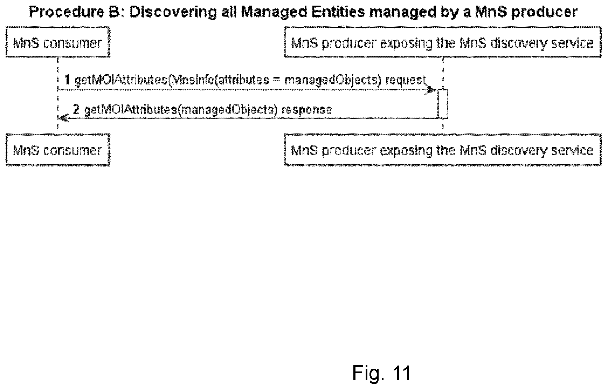

As shown in Fig. 11, the procedure may be as follows:
A MnS discovery consumer gets to know via private communication that a new MnS producer (exposing a certain Management Service) has been added to the management system.
1. The MnS discovery consumer sends an attribute Read ("getMOIAttributes" as defined by 3GPP TS 28.532) request to the MnS discovery producer exposing the MnS discovery service. The MnS discovery consumer specifies in the Read request the MnS producer for which the list of Managed Entities shall be returned. He does so by identifying the "Mnslnfo" instance and requesting only the attribute "managedObjects" be returned.
2. The MnS discovery producer returns a response including the attribute "managedObjects".

### C) Discovering specific MnS producers managing a Managed Entity

A MnS discovery consumer may query from a MnS discovery producer exposing the MnS discovery service the set of MnS producers that manage a given Managed Entity.

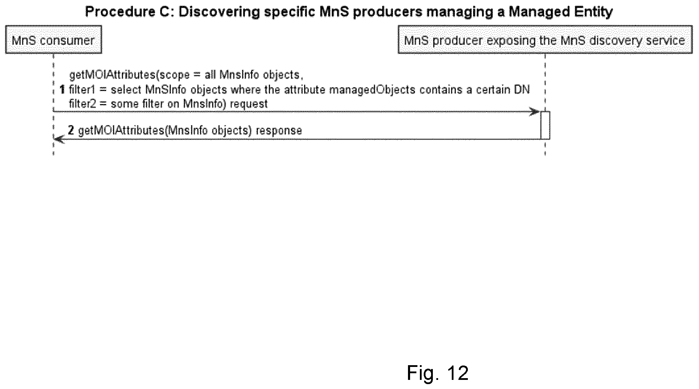

As shown in Fig. 12, the procedure may be as follows:
1. The MnS discovery consumer sends a Read request to the MnS discovery producer exposing the MnS discovery service. The MnS discovery consumer specifies in the Read request the Managed Entity for which the list of MnS producers shall be returned. He does so by selecting all "Mnslnfo" objects in a "MnsRegistry" and filtering on the presence of a certain DN in "managedObjects". When the filter evaluates to true, the "Mnslnfo" object is selected to be returned.
   The MnS discovery consumer may additionally specify in the request a filter on the "Mnslnfo" properties (such as mnsType) to request only objects be returned where the filter evaluates to true.
2. The MnS discovery producer returns a response including the "Mnslnfo" objects that were selected to be returned.

### Option 2.a: with Managed Entity properties included in "Mnslnfo"

### Enhancement to "Mnslnfo"

Instead of only listing the identifier (e.g. DN) of an object representing the Managed Entity in the management system, this identifier may be complemented by properties of the Managed Entity such as the Managed Entity type (e.g. 5G BTS, AMF, HSS) or the vendor of the Managed Entity. The corresponding definition of the attribute "managedObjects" is shown in Table 3:

**Table3 : Definition of the attribute "managedObjects"**

| **Attribute Name** | **Documentation and Allowed Values** | **Properties** |
|---|---|---|
| managed Objects | List of manged objects, incl. their properties, managed by the MnS. Each item in the list is of type "MoProfile". | type: MoProfile |
| | | multiplicity: * |
| | | isOrdered: False |
| | The "MoProfile" includes the Distinguished Name (DN) of a managed object and properties of the ManagedEntity. Properties may include the type of the Managed Entity, the vendor name and any other property related to the Managed Entity. | isUnique: True |
| | | defaultValue: None |
| | | isNullable: False |
| | Note: A managed object represents in the management system a managed entity. | |
| | AllowedValues: NA | |

Procedure B may be modified to procedure B1 due to the modification of "managedObjects":

### B1) Discovering specific Managed Entities managed by a MnS producer

A MnS discovery consumer may inquire from a MnS discovery producer exposing the MnS discovery service the set of Managed Entities that are managed by a given MnS producer.

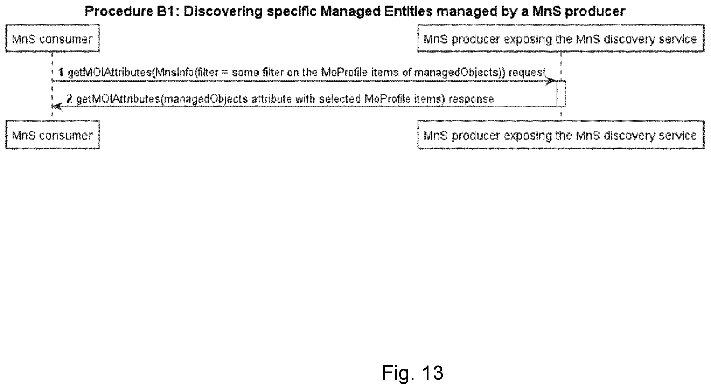

As shown in Fig. 13, the procedure may be as follows:
1. The MnS discovery consumer sends a Read request to the MnS discovery producer exposing the MnS discovery service. The MnS discovery consumer specifies in the Read request the MnS producer for which the list of Managed Entities shall be returned._He does so by identifying in the request the "Mnslnfo" instance and requesting only the attribute "managedObjects" be returned. The MnS discovery consumer may specify as well in the request a filter on the Managed Entity properties (represented by "moProfile") to request only items be returned where the filter evaluates to true.
2. The MnS producer returns a response including the attribute "managedObjects" with "MoProfile" items that passed the filter constraint.

### Option 2.b: with Managed Entity properties included in "Molnfo"

### Enhancement to NRM fragment for MnS discovery

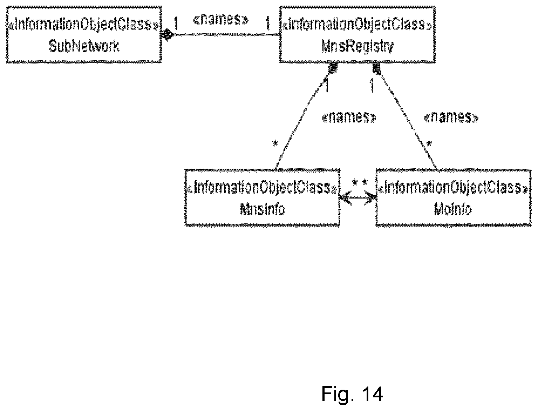

As shown in the class diagram of Fig. 14, an object class "Molnfo" is introduced. This object represents information (meta data) about a managed object, that in turn represents a Managed Entity in the management system. "Molnfo" objects are name-contained under "MnsRegistry".

A "Molnfo" object has an attribute for the DN of a managed object and attributes for properties of the Managed Entity like Managed Entity type (e.g. BTS, AMF, HSS), the vendor name, software release, location (in case of bare metal) or certain functional aspects, such as the supported features, such as the performance measurements the Managed Entity can produce.

The "Molnfo" has a special pointer attribute ("managingMnsRefs") pointing to the "Mnslnfo" instances that manage this Managed Entity (see Table 5). Vice versa, "Mnslnfo" has a special pointer attribute ("moProfileRefs") pointing to the "Molnfo" instances that are managed by "Mnslnfo" (see Table 4).

**Table 4 : Definition of the attribute "moInfoRefs" of "MnsInfo"**

| **Attribute Name** | **Documentation and Allowed Values** | **Properties** |
|---|---|---|
| molnfoRefs | Pointers (references) of "Mnslnfo" to "Molnfo" objects | type: DN |
| | | multiplicity: * |
| | AllowedValues: NA | isOrdered: False |
| | | isUnique: True |
| | | defaultValue: None |
| | | isNullable: False |

**Table 5: Definition of the "Molnfo" object**

| **Attribute Name** | **Documentation and Allowed Values** | **Properties** |
|---|---|---|
| mnslnfoRefs | Pointers (references) of "Molnfo" to "Mnslnfo" objects. The identified MnS producers manage the Managed Entity. | type: DN |
| | | multiplicity: * |
| | | isOrdered: False |
| | AllowedValues: NA | isUnique: True |
| | | defaultValue: None |
| | | isNullable: False |
| moDn | Distinguished Name of the managed object, that this "Molnfo" object represents. Note, this is not the DN of the "Molnfo" object. | type: DN |
| | | multiplicity: 1 |
| | | isOrdered: NA |
| | AllowedValues: NA | isUnique: NA |
| | | defaultValue: None |
| | | isNullable: False |
| moType | Type of the managed object, or more specifically, the type of the Managed Entity, that this object represents. | type: String |
| | | multiplicity: 1 |
| | | isOrdered: NA |
| | AllowedValues: 5GBTS, AMF, HSS, SMF, etc. | isUnique: NA |
| | | defaultValue: None |
| | | isNullable: False |
| anyOtherProperty | There can be more attributes with properties of the Managed Entity like the vendor, the software version. This may also include information about the Managed Entity capabilities, such as which performance measurements (for monitoring the performance of the Managed Entity) can be produced by the Managed Entity. | |

Procedure A to C may be modified to procedure A2 to C2, respectively, due to the introduction of Molnfo object.

### A2) Registering Managed Entities

To register a new MnS producer, a MnS discovery consumer, acting on behalf of that MnS producer, creates an instance of "Mnslnfo" under "MnsRegistry on the MnS discovery producer exposing the MnS discovery service. In addition, the MnS discovery consumer creates for each Managed Entity managed by the new MnS producer an instance of "Molnfo" under "MnsRegistry.

For the creation of the objects, a normal Create operation "createMOI" as defined by 3GPP TS 28.532 may be used. This operation allows to create one object with one operation invocation. As an option, multiple objects may be created at a time with a special operation for bulk provisioning.

MnS discovery consumers with subscriptions on the discovery MnS discovery producer receive object creation notifications ("notifyObjectCreation") for all objects created under "MnsRegistry".

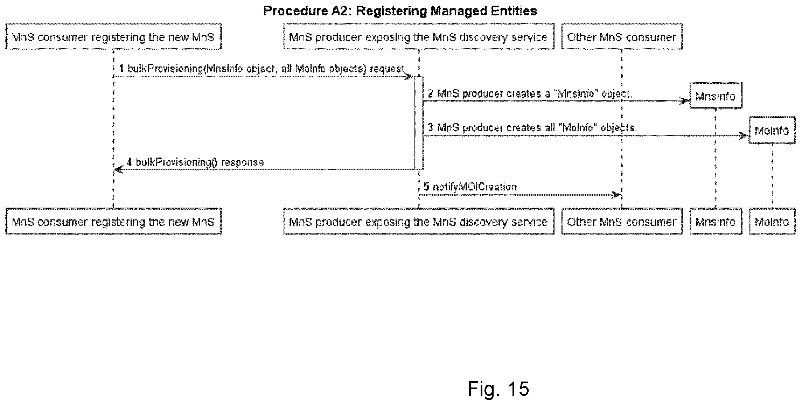

As shown in Fig. 15, the procedure may be as follows:
A MnS discovery consumer gets to know via private communication that a new MnS producer (exposing a certain Management Service with certain Managed Entities) has been added to the management system.
1. The MnS discovery consumer sends a bulk provisioning request to the MnS discovery producer exposing the MnS discovery service. The MnS discovery consumer specifies in the request the "Mnslnfo" object and all "Molnfo" objects to be created under "MnsRegistry".
2. The MnS discovery producer exposing the MnS discovery service creates a "Mnslnfo" object.
3. The MnS discovery producer exposing the MnS discovery service creates all "Molnfo" objects.
4. The MnS discovery producer returns the bulk provisioning response to the MnS discovery consumer indicating successful creation of the "Mnslnfo" object and all "Molnfo" objects.
5. An object creation notification is sent to other MnS discovery consumers that are subscribed to receive object creation notifications.

### B2) Discovering specific Managed Entities managed by a MnS producer

A MnS discovery consumer may inquire from a MnS discovery producer exposing the MnS discovery service the set of Managed Entities that are managed by a given MnS producer.

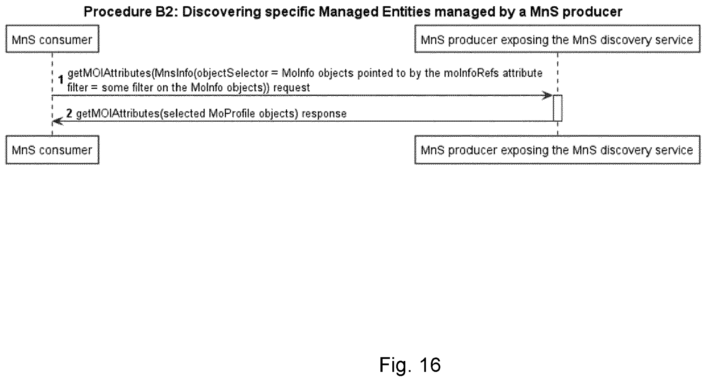

As shown in Fig. 16, the procedure may be as follows:
1. The MnS discovery consumer sends a Read request to the MnS discovery producer exposing the MnS discovery service. The MnS discovery consumer specifies in the Read request the MnS producer for which the list of Managed Entities shall be returned. He does so by identifying in the request the "Mnslnfo" instance and requesting the "Molnfo" objects pointed to by the "molnfoRefs" attribute of the identified "Mnslnfo" object be returned. The MnS discovery consumer may specify as well in the request a filter on the "Molnfo" properties to request only objects be returned where the filter evaluates to true.
2. The MnS discovery producer returns a response including the selected "Molnfo" objects.

As another option for procedure B2, a procedure using simpler Read operations may be used:
1. The MnS discovery consumer sends a first Read request to the MnS discovery producer exposing the MnS discovery service. The MnS discovery consumer specifies in the Read request the "Mnslnfo" instance and requests the attribute "molnfoRefs" with the pointers to the managed "Molnfo" instances be returned.
2. The MnS discovery producer exposing the MnS discovery service returns the "molnfoRefs" attribute.
3. The MnS discovery consumer sends a *second* Read request to the MnS discovery producer exposing the MnS discovery service. The MnS discovery consumer specifies in the Read request the "Molnfo" instances to be returned using the pointers in the received "molnfoRefs" attribute. The MnS discovery consumer may specify as well in the request a filter on the "Molnfo" properties to request only objects be returned where the filter evaluates to true.
4. The MnS discovery producer returns a response including the requested "Molnfo" objects.

### C2) Discovering specific MnS producers managing a Managed Entity

A MnS discovery consumer may query from a MnS discovery producer exposing the MnS discovery service the set of MnS producers that manage a given Managed Entity.

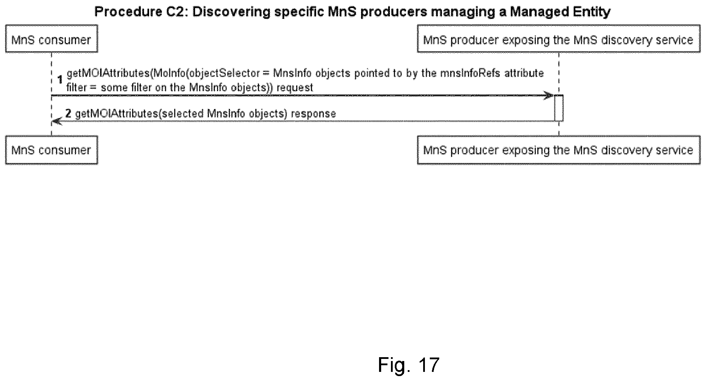

As shown in Fig. 17, the procedure may be as follows:
1. The MnS discovery consumer sends a Read request to the MnS discovery producer exposing the MnS discovery service. The MnS discovery consumer specifies in the Read request the Managed Entity for which the list of MnS producers shall be returned. He does so by identifying in the request the "Molnfo" instance and requesting the "Mnslnfo" objects pointed to by the "mnslnfoRefs" attribute of the identified "Molnfo" object be returned. The MnS discovery consumer may specify as well in the request a filter on the "Mnslnfo" properties (such as mnsType) to request only objects be returned where the filter evaluates to true.
2. The MnS discovery producer returns a response including the "Mnslnfo" objects that were selected to be returned.

As an option, similarly as for procedure B2, procedure C2 may be decomposed into two simpler Read operations.

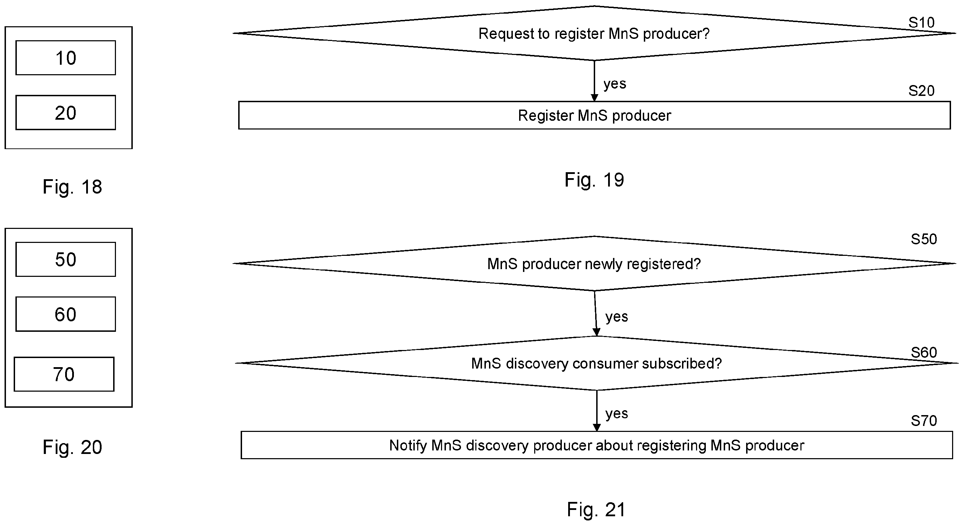

Fig. 18 shows an apparatus according to an example embodiment of the invention. The apparatus may be a MnS discovery consumer or an element thereof. Fig. 19 shows a method according to an example embodiment of the invention. The apparatus according to Fig. 18 may perform the method of Fig. 19 but is not limited to this method. The method of Fig. 19 may be performed by the apparatus of Fig. 18 but is not limited to being performed by this apparatus.

The apparatus comprises means for monitoring 10 and means for registering 20. The means for monitoring 10 and means for registering 20 may be a monitoring means and registering means, respectively. The means for monitoring 10 and means for registering 20 may be a monitor and registrar, respectively. The means for monitoring 10 and means for registering 20 may be a monitoring processor and registering processor, respectively.

The means for monitoring 10 monitors whether a request to register an MnS producer at a MnS discovery service is received (S10). If the request is received (S10 = yes), the means for registering 20 registers the MnS producer at the MnS discovery service (S20).

Fig. 20 shows an apparatus according to an example embodiment of the invention. The apparatus may be a MnS discovery service producer or an element thereof. Fig. 21 shows a method according to an example embodiment of the invention. The apparatus according to Fig. 20 may perform the method of Fig. 21 but is not limited to this method. The method of Fig. 21 may be performed by the apparatus of Fig. 20 but is not limited to being performed by this apparatus.

The apparatus comprises means for monitoring 50, means for checking 60, and means for notifying 70. The means for monitoring 50, means for checking 60, and means for notifying 70 may be a monitoring means, checking means, and notifying means, respectively. The means for monitoring 50, means for checking 60, and means for notifying 70 may be a monitor, checker, and notifier, respectively. The means for monitoring 50, means for checking 60, and means for notifying 70 may be a monitoring processor, checking processor, and notifying processor, respectively.

The means for monitoring 50 monitors whether a MnS discovery service provided by a MnS discovery service producer newly registers a MnS producer in a registry (S50). The means for checking 60 checks if a MnS discovery service consumer is subscribed to the MnS discovery service (S60).

If the MnS discovery service newly registers the MnS producer (S50 = yes) and the MnS discovery service consumer is subscribed to the MnS discovery service (S60 = yes), the means for notifying 70 notifies the MnS discovery service consumer that the MnS producer is registered (S70).

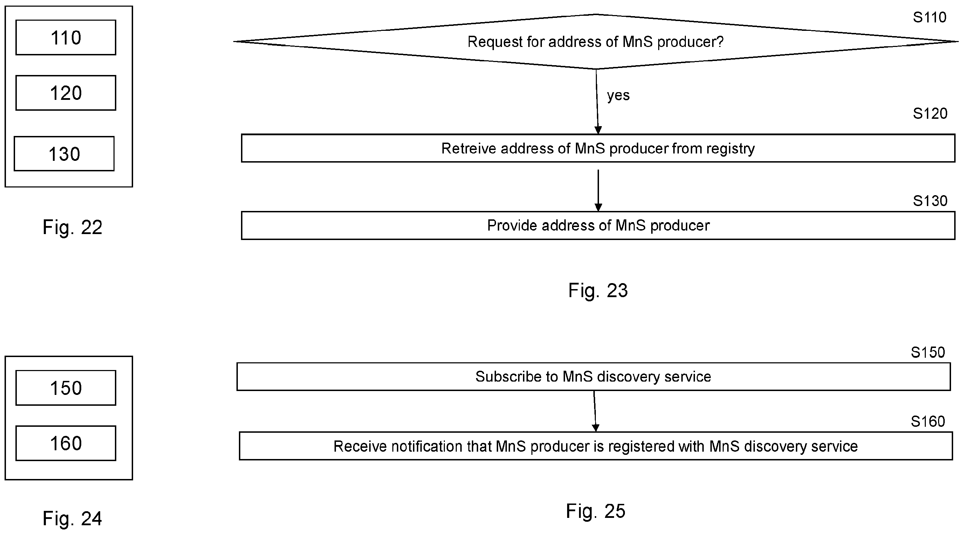

Fig. 22 shows an apparatus according to an example embodiment of the invention. The apparatus may be a MnS discovery service producer or an element thereof. Fig. 23 shows a method according to an example embodiment of the invention. The apparatus according to Fig. 22 may perform the method of Fig. 23 but is not limited to this method. The method of Fig. 23 may be performed by the apparatus of Fig. 22 but is not limited to being performed by this apparatus.

The apparatus comprises means for monitoring 110, means for retrieving 120, and means for providing 130. The means for monitoring 110, means for retrieving 120, and means for providing 130 may be a monitoring means, retrieving means, and providing means, respectively. The means for monitoring 110, means for retrieving 120, and means for providing 130 may be a monitor, retriever, and provider, respectively. The means for monitoring 110, means for retrieving 120, and means for providing 130 may be a monitoring processor, retrieving processor, and providing processor, respectively.

The means for monitoring 110 monitors if a MnS discovery service provided by a MnS discovery service producer receives a request for an address of a MnS producer registered in a registry of the MnS discovery service (S110). If the request is received (S110 = yes), the means for retrieving 120 retrieves the address of the MnS producer from the registry (S120). The means for providing 130 provides the retrieved address of the MnS producer in response to the request (S130).

Fig. 24 shows an apparatus according to an example embodiment of the invention. The apparatus may be a MnS discovery consumer or an element thereof. Fig. 25 shows a method according to an example embodiment of the invention. The apparatus according to Fig. 24 may perform the method of Fig. 25 but is not limited to this method. The method of Fig. 25 may be performed by the apparatus of Fig. 24 but is not limited to being performed by this apparatus.

The apparatus comprises means for subscribing 150 and means for receiving 160. The means for subscribing 150 and means for receiving 160 may be a subscribing means and receiving means, respectively. The means for subscribing 150 and means for receiving 160 may be a subscriber and receiver, respectively. The means for subscribing 150 and means for receiving 160 may be a subscribing processor and receiving processor, respectively.

The means for subscribing 150 subscribes to a MnS discovery service provided by a MnS discovery service producer (S150). Then, due to the subscription, the means for receiving 160 receives a notification from the MnS discovery service producer that a MnS producer is registered with the MnS discovery service (S160).

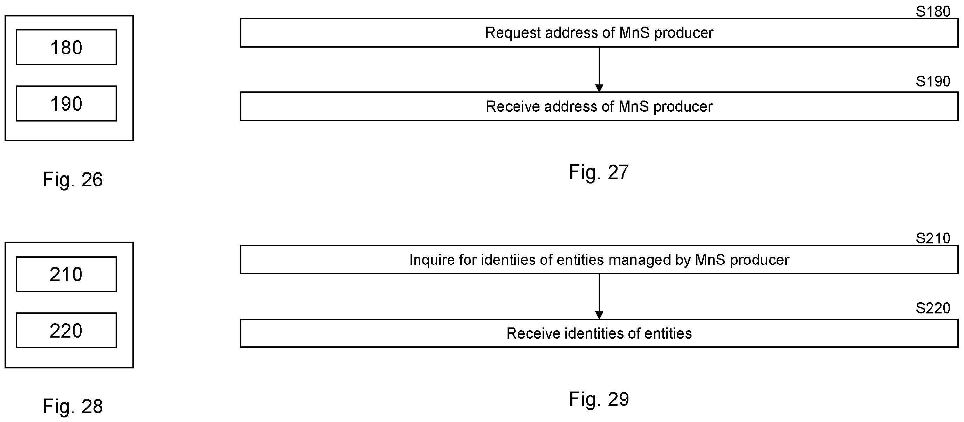

Fig. 26 shows an apparatus according to an example embodiment of the invention. The apparatus may be a MnS discovery consumer or an element thereof. Fig. 27 shows a method according to an example embodiment of the invention. The apparatus according to Fig. 26 may perform the method of Fig. 27 but is not limited to this method. The method of Fig. 27 may be performed by the apparatus of Fig. 26 but is not limited to being performed by this apparatus.

The apparatus comprises means for requesting 180 and means for receiving 190. The means for requesting 180 and means for receiving 190 may be a requesting means and receiving means, respectively. The means for requesting 180 and means for receiving 190 may be a requester and receiver, respectively. The means for requesting 180 and means for receiving 190 may be a requesting processor and receiving processor, respectively.

The means for requesting 180 requests an address of a MnS producer from a MnS discovery service producer (S180). The means for receiving 190 receives the address of the MnS producer in response to the request (S190).

Fig. 28 shows an apparatus according to an example embodiment of the invention. The apparatus may be a MnS discovery consumer or an element thereof. Fig. 29 shows a method according to an example embodiment of the invention. The apparatus according to Fig. 28 may perform the method of Fig. 29 but is not limited to this method. The method of Fig. 29 may be performed by the apparatus of Fig. 28 but is not limited to being performed by this apparatus.

The apparatus comprises means for inquiring 210 and means for receiving 220. The means for inquiring 210 and means for receiving 220 may be a inquiring means and receiving means, respectively. The means for inquiring 210 and means for receiving 220 may be a inquirer and receiver, respectively. The means for inquiring 210 and means for receiving 220 may be a inquiring processor and receiving processor, respectively.

The means for inquiring 210 inquires a MnS discovery service producer for one or more identities of entities (S210). According to the registry of the MnS discovery service producer, the entities are managed by a MnS producer. In response to the inquiring (S210), the means for receiving 220 receives identities of the one or more entities (S220).

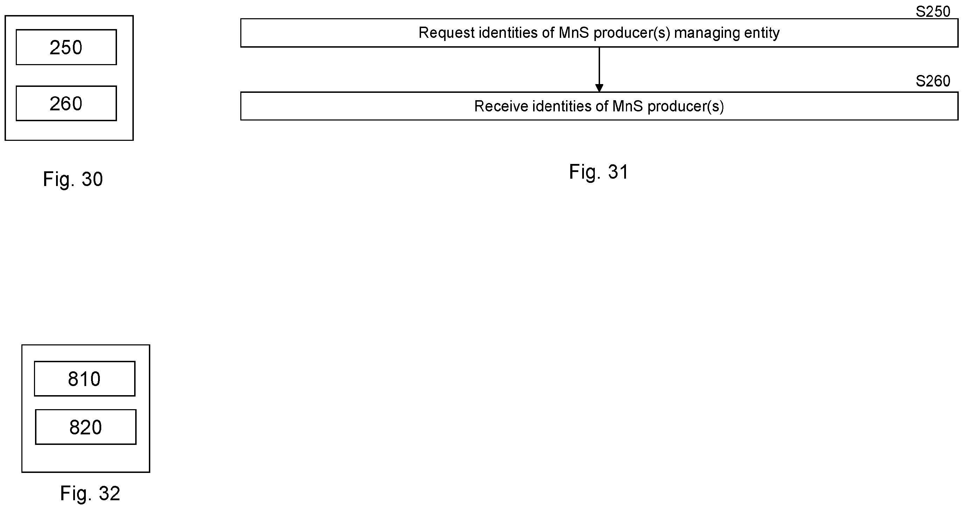

Fig. 30 shows an apparatus according to an example embodiment of the invention. The apparatus may be a MnS discovery consumer or an element thereof. Fig. 31 shows a method according to an example embodiment of the invention. The apparatus according to Fig. 30 may perform the method of Fig. 31 but is not limited to this method. The method of Fig. 31 may be performed by the apparatus of Fig. 30 but is not limited to being performed by this apparatus.

The apparatus comprises means for querying 250 and means for receiving 260. The means for querying 250 and means for receiving 260 may be a querying means and receiving means, respectively. The means for querying 250 and means for receiving 260 may be a questor and receiver, respectively. The means for querying 250 and means for receiving 260 may be a querying processor and receiving processor, respectively.

The means for querying 250 queries a MnS discovery service producer for identities of MnS producers (S250). According to a registry of the MnS discovery service producer the MnS producers are managing an entity. In response to the query (S250), the means for receiving 260 receives identities of the one or more MnS producers managing, according to the registry, the entity (S260).

Fig. 32 shows an apparatus according to an embodiment of the invention. The apparatus comprises at least one processor 810, at least one memory 820 including computer program code, and the at least one processor 810, with the at least one memory 820 and the computer program code, being arranged to cause the apparatus to at least perform at least the method according to at least one of Figs. 19, 21, 23, 25, 27, 29, and 31 and related description.

Some example embodiments are explained with respect to a 5G network. However, the invention is not limited to 5G. It may be used in other networks, too, e.g. in previous of forthcoming generations of 3GPP networks such as 4G, 6G, or 7G, etc. It may be used in non-3GPP networks including any radio communication networks and also in wired communication networks. It may be used not only in communication networks but also in other systems (such as power grid systems) if at least part of their management system has a service based architecture.

DN is an example of an identifier of an object. Other identifiers (such as FDN) may be used instead or in addition.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments of the present invention provide, for example, an MnS service discovery consumer or a component thereof, an apparatus embodying the same, a method for controlling and/or operating the same, and computer program(s) controlling and/or operating the same as well as mediums carrying such computer program(s) and forming computer program product(s). The MnS service discovery consumer may act as a MnS service producer. According to the above description, it should thus be apparent that example embodiments of the present invention provide, for example, a MnS service discovery producer or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments of the present invention. However, it should be noted that the description of the preferred example embodiments is given by way of example only and that various modifications may be made without departing from the scope of the invention as defined by the appended claims.

## Claims

1. Apparatus comprising:
one or more processors, and
memory storing instructions that, when executed by the one or more processors, cause the apparatus to perform:
inquiring a management service discovery service producer for one or more identities of entities managed, according to a registry of the management service discovery service producer, by a management service producer;
receiving, in response to the inquiring, identities of the one or more entities.

2. The apparatus according to claim 1, wherein the inquiry comprises a property filter criterion based on a property of the entities managed by the management service producer.

3. Apparatus comprising:
one or more processors, and
memory storing instructions that, when executed by the one or more processors, cause the apparatus to perform:
querying a management service discovery service producer for identities of management service producers managing, according to a registry of the management service discovery service producer, an entity;
receiving, in response to the query, identities of the one or more management service producers managing, according to the registry, the entity.

4. The apparatus according to claim 3, wherein the query comprises a capability filter criterion based on a capability of the management service producers.

5. Apparatus comprising:
one or more processors, and
memory storing instructions that, when executed by the one or more processors, cause the apparatus to perform:
monitoring whether a request to register an management service producer at a management service discovery service is received;
registering the management service producer at the management service discovery service if the request is received.

6. The apparatus according to claim 5, wherein the management service producer belongs to the apparatus, or wherein the management service producer is managed by the apparatus.

7. The apparatus according to any of claims 5 and 6, wherein the request comprises one or more identities indicating that the management service producer manages one or more entities identified by the one or more identities; and the management service producer is registered along with the one or more identities.

8. Apparatus comprising:
one or more processors, and
memory storing instructions that, when executed by the one or more processors, cause the apparatus to perform:
monitoring whether a management service discovery service provided by a management service discovery service producer newly registers a management service producer in a registry;
checking if a management service discovery service consumer is subscribed to the management service discovery service;
notifying the management service discovery service consumer that the management service producer is registered if the management service discovery service newly registers the management service producer and the management service discovery service consumer is subscribed to the management service discovery service.

9. The apparatus according to claim 8, wherein
the monitoring comprises monitoring if the management service discovery service newly registers the management service producer along with one or more identities, wherein the one or more identities indicate that the management service producer manages one or more entities identified by the one or more identities; and
the notifying comprises notifying that the management service producer is registered along with the one or more identities if the management service discovery service newly registers the management service producer along with the one or more identities.

10. Apparatus comprising:
one or more processors, and
memory storing instructions that, when executed by the one or more processors, cause the apparatus to perform:
monitoring if a management service discovery service provided by a management service discovery service producer receives a request for an address of a management service producer registered in a registry of the management service discovery service;
retrieving the address of the management service producer from the registry if the request is received;
providing the address of the management service producer in response to the request.

11. The apparatus according to any of claims 8 to 10, wherein the instructions, when executed by the one or more processors, further cause the apparatus to perform:
monitoring if an inquiry is received, wherein the inquiry asks for the one or more identities;
retrieving the one or more identities registered along with the management service producer from the registry if the inquiry is received;
providing the one or more identities in response to the inquiry.

12. The apparatus according to claim 11, wherein
each of the one or more identities is registered along with a respective value of a property;
the inquiry comprises a property filter criterion based on the property; and the instructions, when executed by the one or more processors, further cause the apparatus to perform:
checking, for each of the retrieved identities, whether the respective value of the property fulfills the property filter criterion;
inhibiting, for each of the retrieved identities, the providing of the respective identity if the respective value of the property does not fulfill the property filter criterion.

13. The apparatus according to any of claims 8 to 12, wherein the instructions, when executed by the one or more processors, further cause the apparatus to perform:
monitoring if a query is received, wherein the query asks for identities of management service producers managing, according to the registry, one of the one or more entities identified by one of the one or more identities;
retrieving the identities of the management service producers for which the one of the one or more identities is registered in the registry along with the management service producer if the query is received;
providing the retrieved identities of the management service producers in response to the query.

14. The apparatus according to claim 13, wherein
each of the management service producers is registered along with a respective capability;
the query comprises a capability filter criterion related to a capability; and the instructions, when executed by the one or more processors, further cause the apparatus to perform:
checking, for each of the management service producers, whether the respective capability fulfills the capability filter criterion;
inhibiting, for each of the management service producers, the providing of the identity of the respective management service producer, if the respective capability does not fulfill the capability filter criterion.

15. Apparatus comprising:
one or more processors, and
memory storing instructions that, when executed by the one or more processors, cause the apparatus to perform:
subscribing to a management service discovery service provided by a management service discovery service producer;
receiving a notification from the management service discovery service producer that a management service producer is registered with the management service discovery service.

16. The apparatus according to claim 15, wherein the notification informs that the management service producer manages one or more entities identified by one or more identities.

17. Apparatus comprising:
one or more processors, and
memory storing instructions that, when executed by the one or more processors, cause the apparatus to perform:
requesting an address of a management service producer from a management service discovery service producer;
receiving the address of the management service producer in response to the request.

18. The apparatus according to claim 17, wherein, in addition to the address of the management service producer, one or more identities are received, wherein the identities inform that the management service producer manages one or more entities identified by one or more identities.
